# EUROPEAN PATENT SPECIFICATION

(11) **EP 3 837 963 B1**
(45) Date of publication and mention of the grant of the patent: **02.10.2024**
(21) Application number: 20189449.0
(22) Date of filing: 04.08.2020
(51) Int. Cl.: A01F 15/10, A01F 15/08, A01F 15/16

(54) **METHODS AND SYSTEMS FOR MEASURING THROUGHPUT IN AGRICULTURAL EQUIPMENT**
VERFAHREN UND SYSTEME ZUR MESSUNG DES DURCHSATZES IN LANDWIRTSCHAFTLICHER AUSRÜSTUNG
PROCÉDÉS ET SYSTÈMES DE MESURE DU DÉBIT DANS UN ÉQUIPEMENT AGRICOLE

(30) Priority: 20.12.2019 US 201962951213 P
(43) Date of publication of application: 23.06.2021
(73) Proprietor: AGCO Corporation, Duluth, GA 30096 (US)
(72) Inventor: Weller, Lucas Andrew, Hesston, Kansas 67062 (US); Wire, Jason, Hesston, Kansas 67062 (US)
(74) Representative: AGCO Intellectual Property Department

(56) References cited:
- EP-A1- 1 066 747
- EP-A1- 3 031 317
- EP-A1- 3 103 323
- EP-A2- 2 689 654
- US-A1- 2004 016 204

## Description

### BACKGROUND OF THE INVENTION

Aspects of the invention are generally directed to agricultural equipment including agricultural balers and other crop-gathering equipment. More particularly, aspects of the invention are directed to agricultural balers or other equipment that provide throughput data or other agronomic information to an operator.

Producers often use an agricultural baler to collect crop materials such as hay or similar from a windrow and compress the hay or other crop into a bale for easy transport and storage. For example, when the grass in a hay field is tall enough for baling, the grass is cut raked into a windrow (i.e., a long line of hay), allowed to dry in the sun and wind, and then processed in an agricultural baler being pulled by a tractor or similar tow vehicle. The agricultural baler picks up the cut hay, conveys it to an internal baling chamber, and compresses the hay into a desired bale shape. Most commonly, the agricultural baler will form the hay into a cylindrically shaped bale having a circular cross-section (i.e., a "round baler"), but other balers may form the hay into a rectangular prism shape having a square cross-section (i.e., a "square baler").

Generally, on a round baler a spinning pickup header engages the cut material in the windrow and directs it to one or more rotors, augers, and other components of a feed mechanism that in turn conveys the cut grass or hay to a baling chamber. The baling chamber includes a series of compression belts that receive the hay and carries it into the baling chamber. The belts are generally upward and outward moving so that a circumference of a portion of the belts pressing on the outer surface of the bale increases as more hay is fed into the baling chamber until the bale reaches a desired size. Once the bale is full size, a wrapping system wraps the cylindrical bale in a suitable bale wrap such as a plastic sheet, net, or other bale wrap. A rear tailgate of baler opens and ejects the bale, and the process repeats itself for the next bale. A similar process is used to create a square bale, however, instead of the hay being conveyed into a chamber including ever-increasing circumferential belts, the hay may be forced into a chamber having a square cross-section and compacted therein and wrapped with twine to form the square bale.

When using an agricultural baler, the operator must continually change speeds to accommodate for the varying amounts of hay in the windrow or other operating conditions. If the operator moves too fast, the operator may overload the pickup headers or pressure-exerting belts resulting in a clog or unevenly distributed bale, while simultaneously increasing horsepower (and thus fuel) requirements. Conversely, if the operator travels too slow, efficiencies decrease. Because current balers are unable to provide an operator feedback regarding how much hay is being taken up by the pickup headers as the baler is pulled along the windrow, operators are unable to accurately and efficiently determine at what speed to operate a tractor or otherwise accurately and efficiently adjust operating parameters to achieve a desired baling performance. There thus remains a need for a baler that provides feedback to a user during operation such as a real-time indication of the rate of hay entering the baler.

It is known from EP 3 103 323 A to provide a method and apparatus for collecting organic material in which the position of the drop floor assembly within a baler feed mechanism can be controlled by hydraulic cylinders dependent upon the floor pressure readings from one or more floor pressure sensors.

### BRIEF SUMMARY OF THE INVENTION

The present invention is directed to methods and systems for collecting organic material throughput data by measuring data associated with a force acting on a floor of agricultural equipment. In some embodiments, the data is measured using at least one of a load cell, pressure sensor, and/or a displacement sensor. The data associated with the force acting on a floor of the agricultural equipment is correlated to a throughput of material being conveyed through the agricultural equipment, and provided to an operator or tow vehicle, in some embodiments in real time.

For example, some embodiments of the invention are directed to a method of monitoring a throughput of a crop in agricultural equipment. The method includes picking cut organic material out of a field using the agricultural equipment and conveying the cut organic material through a feed mechanism of the agricultural equipment, which may include a rotor and a floor proximate the rotor. The method further includes measuring, with a first sensor associated with the floor, force data during the conveying, the force data comprising at least one of: a force exerted on the floor, a pressure applied to the floor, and a displacement of the floor. The method further includes measuring, with a second sensor associated with the rotor, speed data comprising a speed of the rotor during the conveying. The method also includes correlating the force data and the speed data to a rate at which the cut organic material is conveyed through the feed mechanism.

Other embodiments of the invention are directed to a system for monitoring a throughput of a crop in agricultural equipment. The system may include an agricultural baler comprising a crop pickup portion and a baling portion. The crop pickup portion includes at least one rotor and a floor proximate the rotor, with the crop pickup portion being configured to pick up cut organic material from a field and convey the cut organic material downstream to the baling portion. The baling portion is configured to receive the cut organic material being conveyed by the crop pickup portion and bale the cut organic material. The system may further include a material throughput sensing system, which includes a first sensor operatively coupled to the floor and configured to measure force data proportional to a force being exerted on the floor by the cut organic material conveyed by the crop pickup portion, the force data comprising at least one of: a force exerted on the floor by the cut organic material, a pressure applied to the floor by the cut organic material, and a displacement of the floor, and a second sensor operably coupled to the rotor and configured to measure speed data comprising a speed of the rotor as the cut organic material is conveyed by the crop pickup portion. The system may further include a processor configured to correlate the force data and the speed data to a rate of the cut organic material being conveyed through the crop pickup portion.

These and other features will be discussed in more detail below in connection with the accompanying drawings.

### BRIEF DESCRIPTION OF THE DRAWINGS

The present invention is described in detail below with reference to the attached drawing figures, wherein:
FIG. 1 is an elevation view of an agricultural baler as one example of agricultural equipment used to collect organic material throughput data according to aspects of the invention;
FIG. 2 is a perspective view of the agricultural baler shown in FIG. 1 and showing a crop pickup portion according to aspects of the invention;
FIG. 3 is a fragmentary view of the agricultural baler shown in FIGS. 1-2 and showing in detail the crop pickup portion according to aspects of the invention;
FIG. 4 is cross-sectional view of the agricultural baler shown in FIGS. 1-3 and showing the crop pickup portion and a baling portion according to aspects of the invention;
FIG. 5 is an elevation view of certain components of the crop pickup portion of the agricultural baler shown in FIGS. 1-4;
FIG. 6 is a schematic showing the operation of a material throughput sensing system of the agricultural baler shown in FIGS. 1-5 according to aspects of the invention;
FIG. 7 is a flowchart schematically representing a method of adjusting an operating parameter of agricultural equipment using a material throughput sensing system, such as the one shown in FIG. 6, according to aspects of the invention; and
FIG. 8 is a flowchart schematically representing a method of making at least one planting or treatment decision using a material throughput sensing system, such as the one shown in FIG. 6, according to aspects of the invention.

### DETAILED DESCRIPTION OF THE INVENTION

Generally, aspects of the invention are directed to methods and systems for measuring a rate of hay or other crop take-up by a piece of agricultural equipment such as an agricultural baler. More particularly, in embodiments directed an agricultural baler, the methods and systems measure a rate of hay being taken in by the baler as a bale is being formed by correlating a force being exerted by the hay on a rotor floor in the crop pickup portion of the agricultural baler. This data in turn provides an operator real-time yield data and other valuable agronomic data and, in some embodiments, can be used to aid in autonomously controlling the speed of a tractor employing a Tractor Implement Management (TIM) system, among other benefits. These and other aspects of the invention will become more apparent via the detailed description of the invention in connection with the accompanying figures.

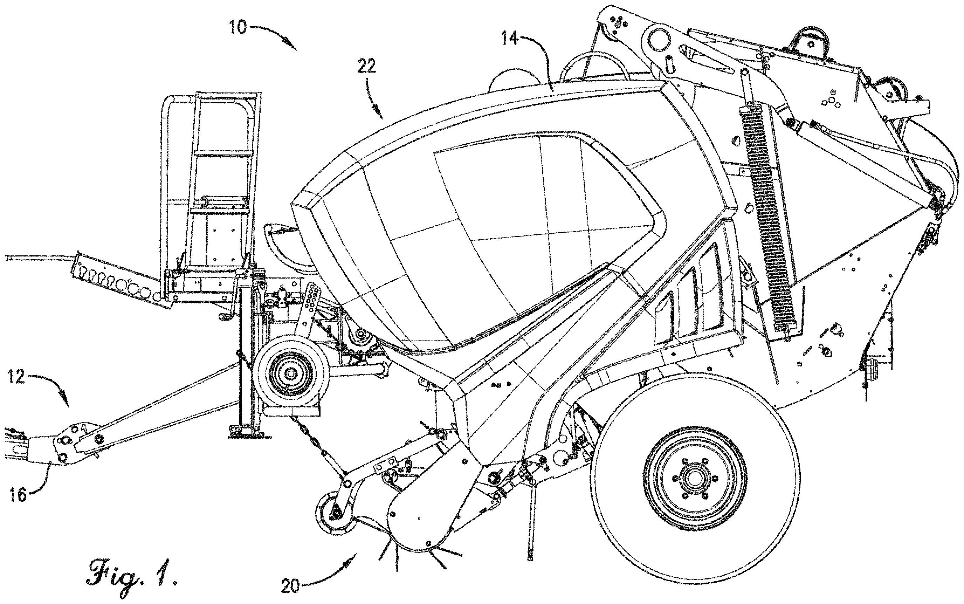

FIG. 1 shows an agricultural baler 10 that may employ various aspects of the invention. Although for simplicity aspects of the invention will be described in detail with respect to the agricultural baler 10, the invention is not limited to the agricultural baler 10 and may be employed on various types of agricultural equipment without departing from the scope of the claims. For example, although the agricultural baler 10 is a round baler, in other embodiments aspects of the invention may be included on a square baler or other type of baler. Or aspects of the invention may be employed on non-baler equipment such as a combine harvester or the like with the material throughput sensing system described herein incorporated in a crop gathering header of the combine harvester.

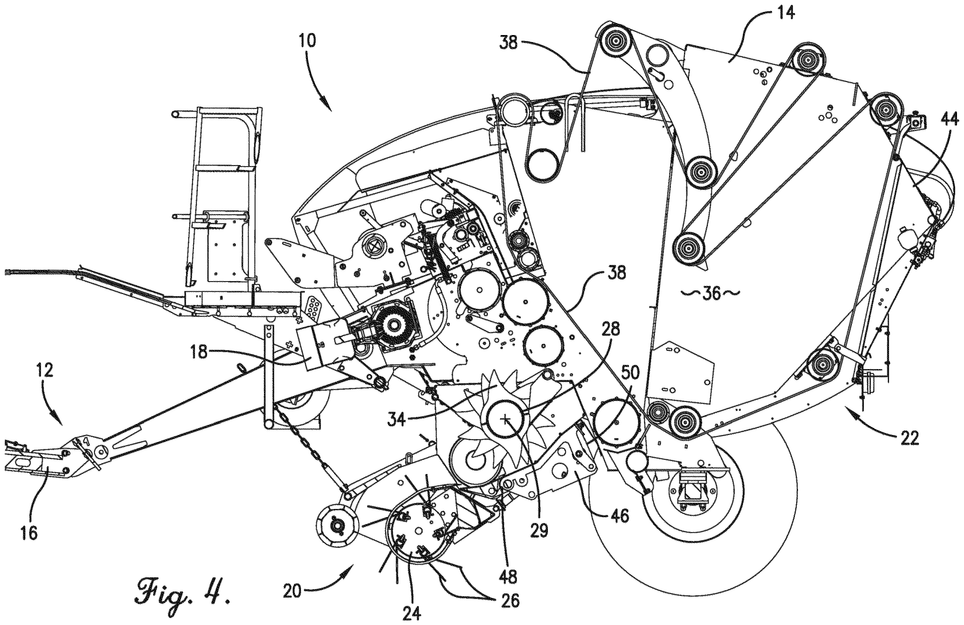

The agricultural baler 10 generally includes a towing and driveline portion 12 extending from a main body 14. The towing and driveline portion 12 includes a tow hitch 16 configured to be connected to a towing vehicle such as a tractor or the like during operation, such that the baler is pulled in a forward direction along a windrow of dried hay or similar crop lying in a field. The towing and driveline portion 12 may also include driveline connections 18 (FIG. 4) for operably connecting the drivable features of the agricultural baler 10 (i.e., the pickups, rotor, baling mechanism, etc., which will be discussed in more detail below) to a power take-off (PTO) portion of the towing vehicle.

The main body 14 generally includes a crop pickup portion 20 and a baling portion 22. During operation, the crop pickup portion 20 engages the cut hay or other crop lying in a field and conveys it upward and rearward towards the baling portion 22. The baling portion 22 in turn compresses the hay into a desired shape (in the case of a round baler, into a cylindrical bale), wraps the bale, and ejects the bale into the field for later retrieval.

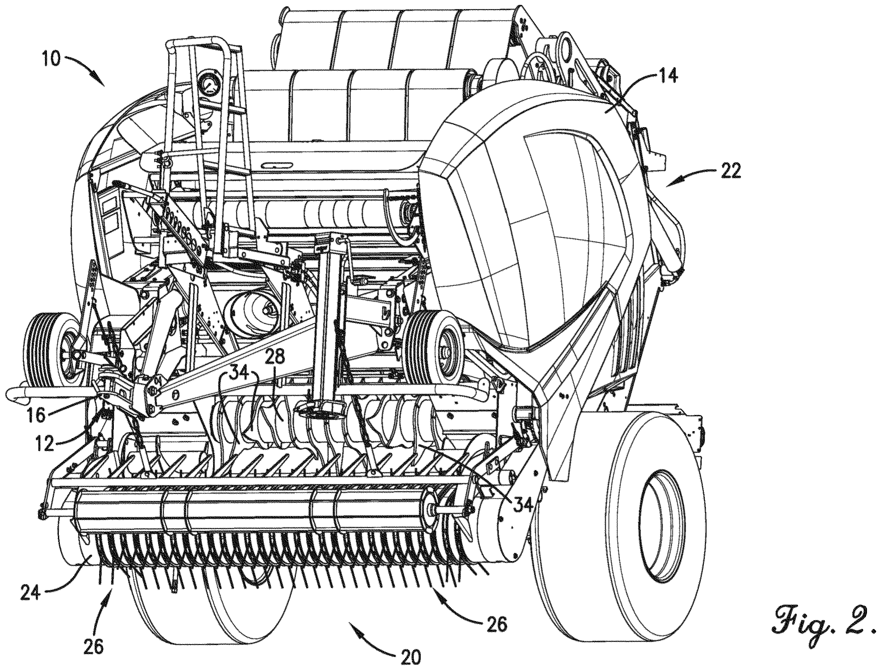

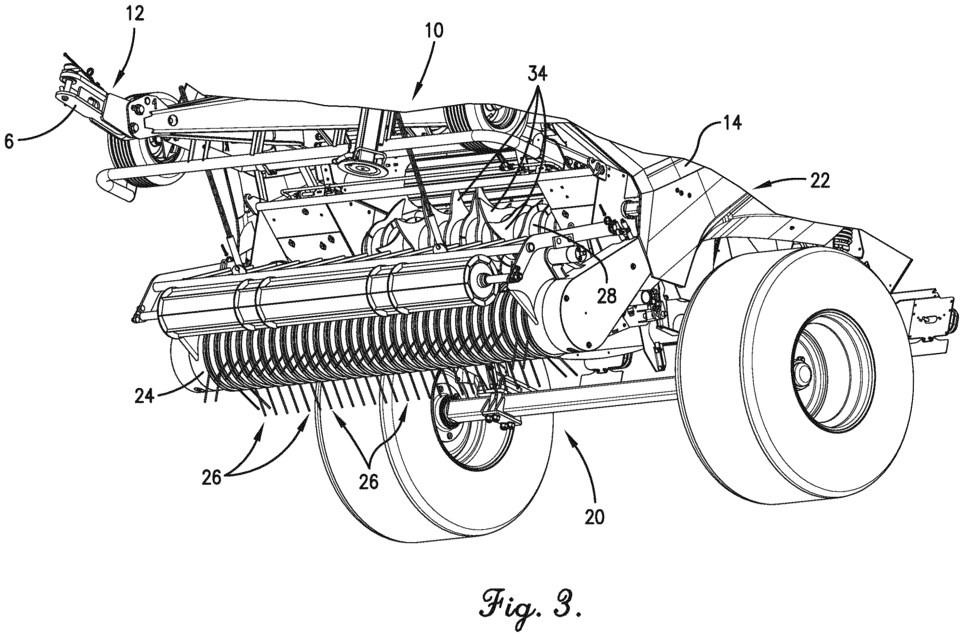

FIGS. 2 and 3 show the crop pickup portion 20 in more detail. The crop pickup portion 20 includes a rotary rake 24 that engages the hay or other crop in a windrow. The rotary rake 24 includes a plurality of spinning tines 26 that contact the hay or other crop as the agricultural baler 10 is towed forward and flings the hay or other crop upwards and rearwards toward the baling portion 22. The crop pickup portion 20 may further include a rotor 28 that is configured to stuff the hay or other crop into the baling portion 22. In some embodiments, the crop pickup portion 20 may include one or more augers operably coupled to the rotor 28 and sandwiching a plurality of stuffers 34 or else provided upstream of the rotor 28. When the hay or other crop leaves the rotary rake 24, the augers center the hay and the spinning stuffers 34 of the rotor 28 pack the hay into the baling portion 22.

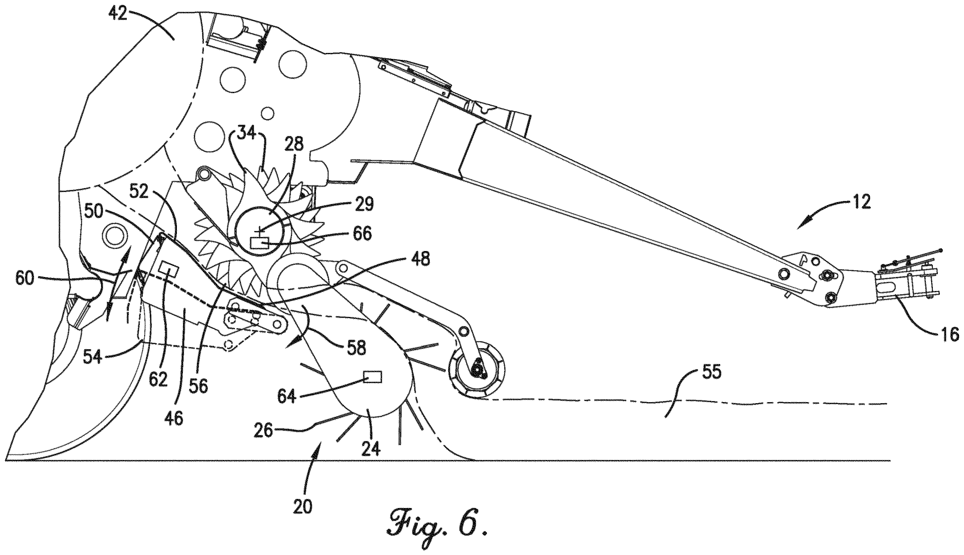

FIG. 4 shows the baling portion 22 in more detail. The baling portion 22 generally includes a baling chamber 36, a plurality of compression belts 38, and a wrapping mechanism. The rotor 28 stuffs the hay or other crop into the baling chamber 36, and more particularly into the compression belts 38 provided in the baling chamber 36. The rotating compression belts 38 continuously roll the hay or other crop and apply pressure thereto, therefore compacting the hay or other into a densely packed bale. The compression belts 38 are expandable such that as more and more hay or other crop enters the baling chamber 36, the circumference of the portion of the belts 38 pressing on the bale 42 (shown in FIG. 6) expands as the outer circumference of the bale 42 expands with the addition of more hay or other crop 55 being added to the bale 42. Once the desired size of the bale 42 is achieved, the wrapping mechanism wraps the outer circumference of the bale 42 in plastic, netting, or another desired wrap. Finally, a movable tailgate 44 of the agricultural baler 10 swings open and the wrapped bale 42 is ejected into the field for later collection.

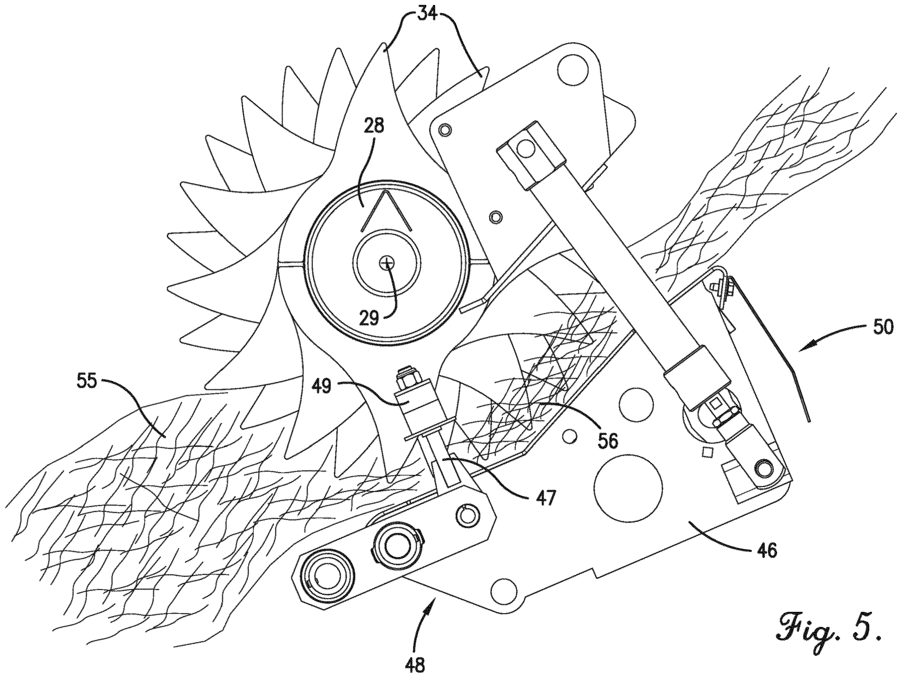

Some embodiments of the invention are directed to a material throughput sensing system incorporated into agricultural equipment such as the agricultural baler 10 shown in FIGS. 1-4, which senses a force exerted on portions of the crop pickup portion 20 and correlates the force to a rate of hay or other crop entering the baling portion 22 of the agricultural baler 10. More particularly, in some embodiments the crop pickup portion 20 may include a movable rotor floor 46 directly beneath the rotor 28, as shown in FIGS. 5 and 6. The movable rotor floor 46 may beneficially increase the cross-sectional area of an inlet to the baling chamber 36 in an effort prevent the inlet of the baling chamber 36 from becoming blocked. More particularly, the movable rotor floor 46 reduces the risk of blockage by incorporating a suspension unit that allows the rotor floor 46 to translate and/or rotate with respect to a rotational axis 29 of the rotor 28 thereby dynamically altering a passageway between the rotor 28 and the floor 46 during use. In some embodiments, for example, the suspension unit may include one or more suspension members 47, which, in some embodiments, may include rubber bushings or the like that permit the floor 46 to translate and/or rotate as a cut crop is fed through the crop pickup portion 20 and thus exerts a force on the rotor floor 46. The floor may also include one or more biasing members 49 that bias the floor 46 towards the rotor 28 and thus causes the floor 46 to substantially abut the rotor 28 when no force is applied thereto.

More particularly, as best seen in FIG. 6, when no force or relatively little force is applied to the floor 46, the floor 46 is in a first position 52 where it generally abuts the rotor 28. However, as the force acting on the rotor floor 46 increases, the acting force counteracts the biasing force thus moving the rotor floor downward and away from the rotor 28 to a second position 54. It should be appreciated that the first and second positions 52, 54 are illustrative only and in practice there will be infinite positions for the rotor floor 46 to occupy rotates and/or translates during operation.

Aspects of the invention measure the force acting upon the rotor floor 46 and/or the displacement of the rotor floor 46 as an indication of how much hay or other crop is entering the agricultural baler 10 and thus the baling chamber 36. More particularly, and with particularly reference to FIG. 6, as the agricultural baler 10 is towed in a forward direction (i.e., to the right as viewed in FIG. 6), the crop pickup portion 20 engages hay or other crop 55 lying in a windrow, and conveys it towards the baling portion 22 via the rotor 28, as discussed. In this regard, the hay or other crop 55 is forced between the rotor 28 and the rotor floor 46 at an impingement portion 56. Due to the compression of the hay or other crop 55 between the rotor 28 and the rotor floor 46 at the impingement portion 56, the hay or other crop 55 exerts a force on the rotor floor 46 causing it to displace. More particularly, the rotor floor 46 may angularly displace (as generally indicated by arrow 58), and/or may linearly displace (as generally indicated by arrow 60).

The force exerted on the rotor floor 46, the angular displacement of the rotor floor 46, and/or the linear displacement of the rotor floor 46 can be measured and employed in determining a rate of hay entering the agricultural baler 10 and thus the baling chamber 36. In some embodiments, the speed of a portion of the crop pickup portion 20, such as an angular velocity of the rotary rake 24 and/or the rotor 28, is also used when determining the rate of hay entering the agricultural baler 10 and thus the baling chamber 36.

The force exerted on the rotor floor 46 and/or the displacement of the rotor floor 46 can be determined using any suitable sensor 62 operatively connected to the rotor floor 46. For example, in some embodiments the sensor 62 may be an angular displacement sensor that measures the angular displacement of the rotor floor 46 about a pivot axis, which, in some embodiments, may be located near a first end 48 of the rotor floor 46. And in other embodiments, the sensor 62 may be a linear displacement sensor that measures the linear displacement of the rotor floor 46 at a given point of the rotor floor 46 such as, for example, a point near a second end 50 of the rotor floor 46. In still other embodiments the sensor 62 may be a pressure sensor that measures a pressure exerted by the hay or other crop 55 on the rotor floor 46. And in still other embodiments the sensor 62 may be a load cell that measures a load exerted by the hay or other crop 55 on the rotor floor 46.

Any other desired sensor can be used to sense any desired metric proportional to a force exerted by the hay or other crop 55 on the rotor floor 46 without departing from the scope of the claims. Moreover, for embodiments where the metric can be measured without relative movement of the rotor floor 46 (such as, for example, when the sensor 62 is a pressure sensor, load cell, or similar sensor), the rotor floor 46 may be stationary (that is, not pivotably or translatably attached with respect to the rotational axis 49 of the rotor 48 without departing from the scope of the claims. Similarly, the rotational speed of the spinning part of the crop pickup portion 20 can be measured using any desirable sensor. For example, the rotational speed of the rotary rake 24 can be measured using a first speed sensor 64, and/or the rotational speed of the rotor 28 can be measured using a second speed sensor 66.

In some embodiments, the information indicative of the rate of hay or other crop 55 entering the baler 10 or other piece of equipment-more particularly, the information regarding the rotational speed of the rotary rake 24 or rotor 48 (referred to herein as "speed data") together with the force, pressure, or displacement data associated with the rotor floor 46 (referred to herein as "force data")-can be provided to a tow vehicle and/or an operator of a tow vehicle in real-time. This may aid the operator and/or the tow vehicle in making speed or other decisions when baling hay or otherwise picking up a crop. For example, the real-time data may be provided to the operator or another party for real-time monitoring of how much hay is being produced. In other embodiments, the agricultural baler 10 or other piece of agricultural equipment may most efficiently perform at a known throughput rate. Thus, by monitoring the speed of a portion of the crop pickup portion 20 with the first and/or second speed sensor 64, 66 and/or the force exerted on the rotor floor 46 by the sensor 62, the throughput rate of the hay or other crop 55 being picked up from the field can be provided to the tow vehicle and/or to the operator of the tow vehicle (via a user interface on-board the tow vehicle) and necessary adjustments to speed of the vehicle and/or the PTO can be made until a more efficient take-up rate is achieved.

In some embodiments, adjustments to drive speed, PTO speed, or other parameter of the tow vehicle can be performed autonomously in response to the sensed take-up rate. For example, certain tow vehicles such as tractors may be outfitted with a universal Tractor Implement Management (TIM) system and/or an ISOBUS-compatible system. In such embodiments, an implement (such as the agricultural baler 10 or the like) can take control of the tow vehicle in some respects. More particularly, TIM systems similar employ the international ISOBUS standard that enables controllers of implements (such as, e.g., the agricultural baler 10) and the tow vehicle (such as, e.g., a tractor) to communicate and control one another. As should be appreciated by one skilled in the art, TIM systems reduce the amount of repetitive actions that must be traditionally performed by an operator of the tractor. As one example, when baling hay traditionally operators must stop the tractor each time the baling chamber is full to allow the baler to wrap and eject the fully formed hay bale. But in balers equipped with TIM, the baler may autonomously (i.e., without input from the operator) reduce the tractor's speed or stop the tractor when the bale is fully formed, and thereafter increase the tractor's speed once the hay bale has been ejected.

According to aspects of the invention, when agricultural equipment is equipped with a TIM system and/or an ISOBUS-compatible system, the TIM system and/or ISOBUS-compatible system may increase the tractor driving speed and/or the rotation speed of the PTO when the sensor data indicates that the hay take-up rate is less than ideal. Conversely, the TIM system and/or the ISOBUS-compatible system may decrease the tractor driving speed and/or the rotation speed of the PTO when the sensor data indicates that the hay take-up rate is higher than ideal.

Additionally or alternatively, the information indicative of the rate of hay or other crop 55 entering the baler or other piece of equipment can be stored via on on-board memory or the like for later transmission to a farm management information system (FMIS) or similar software package. In other embodiments, the data can be wirelessly transmitted to a remote personal computer, server, or other suitable device for later review and use by the grower using the FMIS or similar. As one example, the sensor data can be used to create a yield map or other graphical display, providing the grower with agronomic data for making future planting or treatment decisions for a given field.

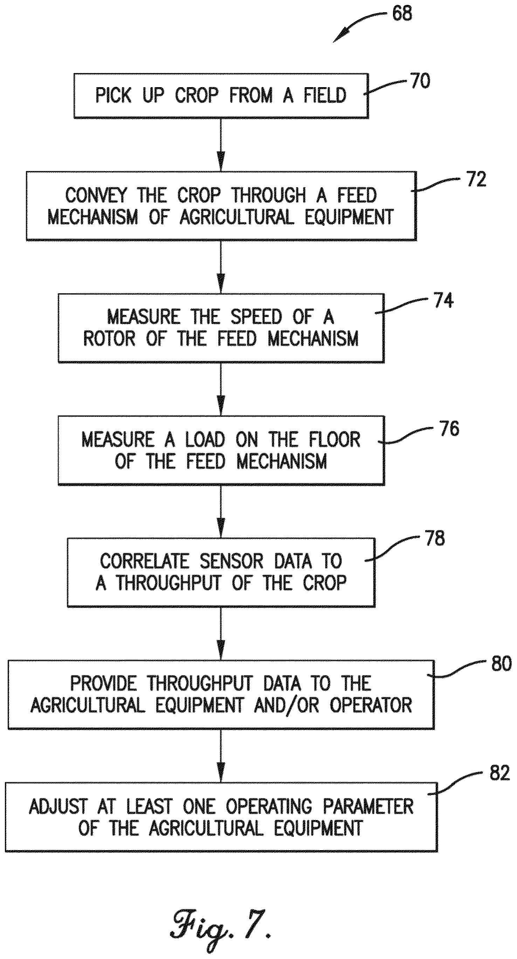

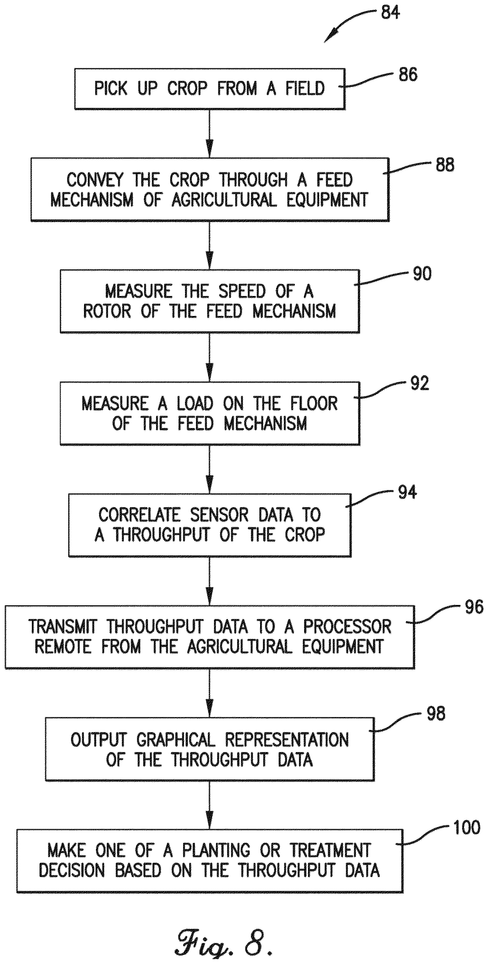

The above described methods and systems may be more readily understood with reference to FIGS. 7 and 8, which schematically depict methods of collecting data using a material throughput sensing system including one or more sensors such as sensors 62, 64, and 66, and using data collected by the same to make a decision regarding towing vehicle speed, PTO speed, planting, treatment, and other decisions.

First, FIG. 7 depicts a method 68 of adjusting an operating parameter of a piece of agricultural equipment according to some embodiments of the invention. At step 70 the agricultural equipment picks up a crop lying in a field. For example, when the agricultural equipment is a baler such as agricultural baler 10, the crop pickup portion 20 engages the hay or other crop 55 lying in a windrow and flings it upwards and rearwards toward the baling portion 22. At step 72, the crop is conveyed to a feed mechanism of the agricultural equipment. Returning the example of the agricultural baler 10, the feed mechanism may include portions of the baler 10 that convey the hay or other crop 55 through the baler 10, and thus in some embodiments may be the rotary rake 24, the rotor 28, and/or the rotor floor 46. In embodiments where the agricultural equipment is a combine harvester or the like, the feed mechanism may be a reel, auger, or other conveying portion of the crop gathering header.

At step 74, a speed of at least a portion of the feed mechanism is measured. Returning to the agricultural baler 10 example, the rotational speed of the rotary rake 24 and/or the rotor 28 is measured using a rotary speed sensor 64 or 66. And at step 76, a characteristic proportional to a force being exerted on a floor of the feed mechanism is measured via a force, pressure, displacement, or similar sensor. For example, and returning to the agricultural baler 10, a characteristic proportional to a force being exerted on the rotor floor 46 is measured using sensor 62. Again, this sensor 62 may be any suitable sensor for measuring data proportional to a load sustained by the floor 46 including, but not limited to, a load cell directly measuring the force exerted on the floor 46, a pressure sensor measuring the pressure exerted on the floor 46, or-when the rotor floor 46 is movable-a displacement sensor such as a linear displacement sensor or an angular displacement sensor.

At step 78, the sensor data is correlated to a throughput of material. More particularly, using one or both of the speed of the rotor or other portion of the feed mechanism ("speed data") and a characteristic proportional to a force being exerted on a floor proximate the rotor or other portion of the feed mechanism ("force data"), a processor or the like determines the rate of material passing through the feed mechanism. This correlation may be done by, for example, inputting the speed data and/or force data into a predetermined equation or other algorithm, by referencing a lookup table that correlates the speed data and/or force data to rate of material passing through the feed mechanism, or by any other desired method. In the agricultural baler 10 example, the rotational speed of the rotary rake 24 and/or the rotor 28 as measured by the sensors 64 and 66, respectively, together with the one of force, pressure, or displacement data as measured by sensor 62 is correlated to a rate of hay or other crop 55 entering the baling chamber 36 of the baler 10.

At step 80, material throughput data is provided to the agricultural equipment and/or an operator of the equipment. In this regard, the data may be outputted to a user interface of the equipment. Or the data may be provided to an electronic control unit (ECU) or other controller of the equipment in addition to or instead of outputting the data to a user interface. In the example of the agricultural baler 10, the data may be provided to an ECU of a tractor or similar tow vehicle and used in connection with a TIM system and/or displayed on a user interface of the tractor. Similarly, in the example of a combine harvester, the data is provided to the ECU of the harvester and/or outputted to a user interface within the cab of the harvester.

Finally, at step 82 one or more operating parameters of the agricultural equipment are adjusted based on the material throughput data. For example, in the example of the agricultural baler 10, if the data is outputted via a user interface or the like to the operator in real-time, and the operator determines that the rate of hay or other crop 55 take-up is less or more than ideal, the operator can increase or decrease, respectively, the driving speed of the tow vehicle and/or the rotational speed of the PTO. Moreover, if the agricultural equipment is equipped with a TIM system or other ISOBUS-compatible system or the like, the operating parameter may be adjusted automatically. For example, the agricultural baler 10 may determine that rate of hay or other crop 55 take-up is less or more than ideal, and in turn send an instruction to the ECU or other controller of the tractor or other tow vehicle to increase or decrease, respectively, the driving speed of the tow vehicle and/or the rotational speed of the PTO. Similarly, an on-board controller of a combine harvester or the like may automatically adjust one or more characteristics of the combine (driving speed, reel or auger speed, etc.) in response to the material throughput data.

In other embodiments, a farmer, producer, or the like may make one or more planting or treatment decisions based on a review of the material throughput data. This may be best understood with reference to FIG. 8, which is a flowchart schematically depicting a method 84 of making one or more planting or treatment decisions. At steps 86, 88, 90, 92, and 94, the agricultural equipment (e.g., a baler, combine harvester, etc.), picks up a crop in a field, conveys the crop to a feed mechanism, measures a speed of at least a portion of the feed mechanism such as a rotor of the feed mechanism, measures a characteristic proportional to a force being exerted on a floor proximate the rotor or other portion of the feed mechanism, and correlates the speed data and/or force data to a material throughput in a similar manner as discussed above with respect to steps 70, 72, 74, 76, and 78 of method 68, which will thus not be repeated in detail.

At step 96, the material throughput data is transmitted to a processor remote from the agricultural equipment, such as one associated with a software program such as a FMIS program or similar software. This can be performed in real-time via, e.g., wireless communication between the agricultural equipment and a personal computer, server, etc., or the material throughput data may be stored via an on-board memory for later uploading to the FMIS program or similar software. At step 98, the data is graphically outputted to a user (e.g., farmer, producer, operator, etc.). The data may be outputted in any desired format and in some instances is outputted in tabular format such as in a spreadsheet or the like, as a yield map, or in any other desired format.

At step 100, one or more of a planting decision or a treatment decision is made based at least in part on the outputted data. For example, the farmer, producer, or operator, after reviewing the data, may determine a type of crop and/or amount of seed to plant in a field, an amount of fertilizer and/or type of fertilizer to apply to a field, an amount of soil conditioner or type of soil conditioner to apply to a field, among other determinations. In some embodiments, the farmer, producer, or operator may make targeted planting or treatment decisions based on the data. For example, in response to a yield map indicating that there was a lower material throughput (and thus yield) for a first part of a field than for a second part of a field, the farmer, producer, operator, or the like may target the first part of the field with a different planting, treatment, watering, etc., strategy in subsequent plantings.

From the foregoing, it will be seen that this invention is one well adapted to attain all the ends and objects hereinabove set forth together with other advantages which are obvious, and which are inherent to the structure. It is to be understood that all matter herein set forth or shown in the accompanying drawings is to be interpreted as illustrative and not in a limiting sense. Additional objects, advantages, and novel features of the invention will be apparent to those skilled in the art upon examination of the above or may be learned by practice of the invention.

## Claims

1. A computer implemented
method of monitoring a throughput of a crop, the method comprising
picking cut organic material out of a field using agricultural equipment;
conveying the cut organic material through a feed mechanism of the agricultural equipment, the feed mechanism including a rotor (28) and a floor (46) proximate the rotor (28);
measuring, with a first sensor (62) associated with the floor (46), force data during the conveying, the force data comprising at least one of: a force exerted on the floor (46), a pressure applied to the floor (46), and a displacement of the floor (46); **characterised in that** the invention further comprises
measuring, with a second sensor (66) associated with the rotor (28), speed data comprising a speed of the rotor during the conveying, and
correlating the force data and the speed data to a rate of the cut organic material being conveyed through the feed mechanism.

2. The method of claim 1 further comprising outputting in real-time the rate of the cut organic material being conveyed through the feed mechanism.

3. The method of claim 2, wherein the agricultural equipment comprises a tow vehicle and a towable implement (10) including the feed mechanism, and wherein the outputting comprises displaying, on a user interface of the tow vehicle, the rate of the cut organic material being conveyed through the feed mechanism.

4. The method of claim 1 further comprising adjusting an operating parameter of the agricultural equipment in response to the force data.

5. The method of claim 4, wherein the adjusting the operating parameter of the agricultural equipment includes adjusting at least one of: a moving speed of the agriculture equipment, and a rotational speed of the rotor (28).

6. The method of claim 4, wherein the agricultural equipment comprises a tow vehicle and a towable implement (10), and wherein the adjusting the operating parameter of the agricultural equipment includes adjusting at least one of: a driving speed of the tow vehicle, and a rotational speed of a power take-off of the tow vehicle.

7. The method of claim 6, wherein the adjusting the at least one of: a driving speed of the tow vehicle, and a rotational speed of a power take-off of the tow vehicle is performed autonomously.

8. The method of claim 7, wherein the agricultural equipment is equipped with a tractor implement management (TIM) system or an ISOBUS-compatible system, and wherein the adjusting the at least one of: a driving speed of the tow vehicle, and a rotational speed of a power take-off of the tow vehicle is performed autonomously in response to an instruction sent from the towable implement to the tow vehicle.

9. The method of claim 1, wherein the floor (46) proximate the rotor (28) is movable with respect to an axis of rotation of the rotor (28).

10. The method of claim 9, wherein the first sensor (62) is a displacement sensor that measures at least one of: a linear displacement of the floor (46) during the conveying, and an angular displacement of the floor (46) during the conveying.

11. The method of claim 1 further comprising transmitting the rate of the cut organic material being conveyed through the feed mechanism to a processor remote from the agricultural equipment.

12. The method of claim 11 further comprising outputting, by the processor, a yield map based on the rate of the cut organic material being conveyed through the feed mechanism.

13. A system for monitoring a throughput of a crop, the system comprising:
an agricultural baler (10) comprising a crop pickup portion (20) and a baling portion (22), the crop pickup portion (20) including at least one rotor (28) and a floor (46) proximate the rotor (28) and being configured to pick up cut organic material from a field and convey the cut organic material downstream to the baling portion (22), and the baling portion (22) being configured to receive the cut organic material being conveyed by the crop pickup portion (20) and bale the cut organic material;
a material throughput sensing system comprising:
a first sensor (62) operatively coupled to the floor (46) and configured to measure force data proportional to a force being exerted on the floor (46) by the cut organic material conveyed by the crop pickup portion (20); and
a second sensor (66) operably coupled to the rotor (28) and configured to measure speed data proportional to a rotational speed of the rotor (28) as the cut organic material is conveyed by the crop pickup portion (20); and
a processor configured to correlate the force data and the speed data to a rate of the cut organic material being conveyed through the crop pickup portion (20).

14. The system of claim 13 further comprising a tow vehicle configured to tow the agricultural baler, wherein the processor is further configured to output in real-time the rate of the cut organic material being conveyed through the crop pickup portion (20) to the tow vehicle.

15. The system of claim 14, wherein the processor is further configured to adjust an operating parameter of the tow vehicle in response to the force data and the speed data.

16. The system of claim 15, wherein adjusting an operating parameter of the tow vehicle comprises adjusting at least one of: a driving speed of the tow vehicle, and a rotational speed of a power take-off of the tow vehicle.

17. The system of claim 16, wherein the agricultural baler (10) and the tow vehicle are equipped with a tractor implement management (TIM) system or an ISOBUS-compatible system, and wherein the adjusting the at least one of: a driving speed of the tow vehicle, and a rotational speed of a power take-off of the tow vehicle is performed autonomously in response to an instruction sent from the agricultural baler (10) to the tow vehicle.

18. The system of claim 13, wherein the floor (46) proximate the rotor (28) is movable with respect to an axis of rotation of the rotor (28).

19. The system of claim 18, wherein the first sensor (62) is a displacement sensor that measures at least one of a linear displacement of the floor (46), and an angular displacement of the floor (46).

## Patentansprüche

1. Computerimplementiertes Verfahren zum Überwachen eines Durchsatzes eines Ernteguts, wobei das Verfahren aufweist:
Aufnehmen von geschnittenem biologischem Material von einem Feld unter Nutzung einer landwirtschaftlichen Ausrüstung;
Fördern des geschnittenen biologischen Materials durch einen Beschickungsmechanismus der landwirtschaftlichen Ausrüstung, wobei der Beschickungsmechanismus einen Rotor (28) und einen Boden (46) nahe dem Rotor (28) umfasst;
Messen von Kraftdaten während des Förderns, mit einem dem Boden (46) zugeordneten ersten Sensor (62), wobei die Kraftdaten eine auf den Boden (46) ausgeübte Kraft und/oder einen auf den Boden (46) angewandten Druck und/oder eine Verlagerung des Bodens (46) aufweisen;
**dadurch gekennzeichnet, dass** die Erfindung weiterhin aufweist
Messen von eine Geschwindigkeit des Rotors während des Förderns aufweisenden Geschwindigkeitsdaten mit einem dem Rotor (28) zugeordneten zweiten Sensor (66), und
Zuordnen der Kraftdaten und der Geschwindigkeitsdaten zu einer Rate des durch den Beschickungsmechanismus gefördert werdenden geschnittenen biologischen Materials.

2. Verfahren nach Anspruch 1 weiterhin mit Ausgeben der Rate des durch den Beschickungsmechanismus gefördert werdenden geschnittenen biologischen Materials in Echtzeit.

3. Verfahren nach Anspruch 2, wobei die landwirtschaftliche Ausrüstung ein Zugfahrzeug und ein ziehbares Gerät (10), das den Beschickungsmechanismus umfasst, aufweist, und wobei das Ausgeben ein Darstellen der Rate des durch den Beschickungsmechanismus gefördert werdenden geschnittenen biologischen Materials auf einer Nutzerschnittstelle des Zugfahrzeugs umfasst.

4. Verfahren nach Anspruch 1 weiterhin mit Einstellen eines Betriebsparameters der landwirtschaftlichen Ausrüstung als Reaktion auf die Kraftdaten.

5. Verfahren nach Anspruch 4, wobei das Einstellen des Betriebsparameters der landwirtschaftlichen Ausrüstung ein Einstellen einer Bewegungsgeschwindigkeit der landwirtschaftlichen Ausrüstung und/oder einer Rotationsgeschwindigkeit des Rotors (28) umfasst.

6. Verfahren nach Anspruch 4, wobei die landwirtschaftliche Ausrüstung ein Zugfahrzeug und ein ziehbares Gerät (10) aufweist, und wobei das Einstellen des Betriebsparameters der landwirtschaftlichen Ausrüstung ein Einstellen einer Antriebsgeschwindigkeit des Zugfahrzeugs und/oder einer Rotationsgeschwindigkeit einer Zapfwelle des Zugfahrzeugs umfasst.

7. Verfahren nach Anspruch 6, wobei das Einstellen der Antriebsgeschwindigkeit des Zugfahrzeugs und/oder der Rotationsgeschwindigkeit einer Zapfwelle des Zugfahrzeugs autonom ausgeführt wird.

8. Verfahren nach Anspruch 7, wobei die landwirtschaftliche Ausrüstung mit einem Traktor-Gerät-Management(Tractor Implement Management = TIM)-System oder einem ISOBUS-kompatiblen System ausgestattet ist, und wobei das Einstellen der Antriebsgeschwindigkeit des Zugfahrzeugs und/oder der Rotationsgeschwindigkeit einer Zapfwelle des Zugfahrzeugs autonom ausgeführt wird als Reaktion auf einen von dem ziehbaren Gerät an das Zugfahrzeug gesendeten Befehl.

9. Verfahren nach Anspruch 1, wobei der Boden (46) nahe dem Rotor (28) in Bezug auf eine Rotationsachse des Rotors (28) beweglich ist.

10. Verfahren nach Anspruch 9, wobei der erste Sensor (62) ein Verlagerungssensor ist, der eine lineare Verlagerung des Bodens (46) während des Förderns und/oder eine Winkelverlagerung des Bodens (46) während des Förderns misst.

11. Verfahren nach Anspruch 1 weiterhin mit Übermitteln der Rate des durch den Beschickungsmechanismus gefördert werdenden geschnittenen biologischen Materials an einen von der landwirtschaftlichen Ausrüstung entfernten Prozessor.

12. Verfahren nach Anspruch 11 weiterhin mit einem Ausgeben einer Ertragskarte durch den Prozessor basierend auf der Rate des durch den Beschickungsmechanismus gefördert werdenden geschnittenen biologischen Materials.

13. System zum Überwachen eines Durchsatzes eines Ernteguts, wobei das System aufweist:
eine landwirtschaftliche Ballenpresse (10) mit einem Erntegutaufnahmebereich (20) und einem Ballenpressbereich (22), wobei der Erntegutaufnahmebereich (20) mindestens einen Rotor (28) und einen Boden (46) nahe dem Rotor (28) umfasst und eingerichtet ist, geschnittenes biologisches Material von dem Feld aufzunehmen und das geschnittene biologische Material stromabwärts zu dem Ballenpressbereich (22) zu fördern, und wobei der Ballenpressbereich (22) eingerichtet ist, das von dem Erntegutaufnahmebereich (20) geförderte geschnittene biologische Material zu aufzunehmen und das geschnittene biologische Material zu Ballen zu formen;
ein Materialdurchsatzerfassungssystem mit:
einem ersten Sensor (62), der operativ mit dem Boden (46) gekoppelt ist und eingerichtet ist, Kraftdaten zu messen, die proportional zu einer durch das von dem Erntegutaufnahmebereich (20) geförderte geschnittene biologische Material auf den Boden (46) ausgeübten Kraft sind; und
einem zweiten Sensor (66), der operativ an den Rotor (28) gekoppelt und eingerichtet ist, Geschwindigkeitsdaten zu messen, die proportional zu einer Rotationsgeschwindigkeit des Rotors (28) sind, während das geschnittene biologische Material von dem Erntegutaufnahmeteil (20) gefördert wird; und
einem Prozessor, der eingerichtet ist, die Kraftdaten und die Geschwindigkeitsdaten einer Rate des durch den Erntegutaufnahmebereich (20) gefördert werdenden geschnittenen biologischen Materials zuzuordnen.

14. System nach Anspruch 13 weiterhin mit einem Zugfahrzeug, das eingerichtet ist, die landwirtschaftliche Ballenpresse zu ziehen, wobei der Prozessor weiterhin eingerichtet ist, die Rate des durch den Erntegutaufnahmebereich (20) gefördert werdenden geschnittenen biologischen Materials in Echtzeit an das Zugfahrzeug auszugeben.

15. System nach Anspruch 14, wobei der Prozessor weiterhin eingerichtet ist, einen Betriebsparameter des Zugfahrzeugs als Reaktion auf die Kraftdaten und die Geschwindigkeitsdaten einzustellen.

16. System nach Anspruch 15, wobei das Einstellen des Betriebsparameters des Zugfahrzeugs ein Einstellen einer Antriebsgeschwindigkeit des Zugfahrzeugs und/oder einer Rotationsgeschwindigkeit einer Zapfwelle des Zugfahrzeugs aufweist.

17. System nach Anspruch 16, wobei die landwirtschaftliche Ballenpresse (10) und das Zugfahrzeug mit einem Traktor-Gerät-Management(Tractor Implement Management = TIM)-System oder einem ISOBUS-kompatiblen System ausgestattet sind, und wobei das Einstellen der Antriebsgeschwindigkeit des Zugfahrzeugs und/oder der Rotationsgeschwindigkeit einer Zapfwelle des Zugfahrzeugs autonom als Reaktion auf einen von der landwirtschaftlichen Ballenpresse (10) an das Zugfahrzeug gesendeten Befehl ausgeführt wird.

18. System nach Anspruch 13, wobei der Boden (46) nahe dem Rotor (28) in Bezug auf eine Rotationsachse des Rotors (28) beweglich ist.

19. System nach Anspruch 18, wobei der erste Sensor (62) ein Verlagerungssensor ist, der eine lineare Verlagerung des Bodens (46) und/oder eine Winkelverlagerung des Bodens (46) misst.

## Revendications

1. Procédé de contrôle d'un flux de récolte mis en oeuvre sur ordinateur, le procédé comprenant :
la collecte d'un matériau organique coupé dans un champ en utilisant un équipement agricole ;
le transfert du matériau organique coupé par l'intermédiaire d'un mécanisme d'alimentation de l'équipement agricole, le mécanisme d'alimentation comportant un rotor (28) et un plancher (46) à proximité du rotor (28) ;
la mesure, avec un premier capteur (62) associé au plancher (46), de données d'effort au cours du transfert, les données d'effort comprenant au moins celles parmi : un effort exercé sur le plancher (46), une pression appliquée sur le plancher (46) et un déplacement du plancher (46) ;
**caractérisé en ce que** le procédé de l'invention comprend, en outre :
la mesure, avec un second capteur (66) associé au rotor (28), de données de vitesse comprenant une vitesse du rotor pendant le transfert, et
la corrélation des données d'effort et des données de vitesse avec un flux du matériau organique coupé transféré par l'intermédiaire du mécanisme d'alimentation.

2. Procédé selon la revendication 1, comprenant, en outre, la fourniture en temps réel du flux du matériau organique coupé et transféré par l'intermédiaire du mécanisme d'alimentation.

3. Procédé selon la revendication 2, dans lequel l'équipement agricole comprend un véhicule de remorquage et un outillage pouvant être remorqué (10) comportant le mécanisme d'alimentation et dans lequel la fourniture comprend l'affichage, sur une interface d'utilisateur du véhicule de remorquage, du flux du matériau organique coupé et transféré par l'intermédiaire du mécanisme d'alimentation.

4. Procédé selon la revendication 1, comprenant, en outre, le réglage d'un paramètre opérationnel de l'équipement agricole en réponse aux données d'effort.

5. Procédé selon la revendication 4, dans lequel le réglage du paramètre opérationnel de l'équipement agricole comporte le réglage d'au moins l'une parmi : une vitesse de déplacement de l'équipement d'agriculture et une vitesse de rotation du rotor (28).

6. Procédé selon la revendication 4, dans lequel l'équipement agricole comprend un véhicule de remorquage et un outillage pouvant être remorqué (10) et dans lequel le réglage du paramètre opérationnel de l'équipement agricole comporte le réglage d'au moins l'une parmi : une vitesse de déplacement du véhicule de remorquage et une vitesse de rotation d'une prise de couple du véhicule de remorquage.

7. Procédé selon la revendication 6, dans lequel le réglage d'au moins l'une parmi : une vitesse de déplacement du véhicule de remorquage et une vitesse de rotation d'une prise de couple du véhicule de remorquage est réalisé de façon autonome.

8. Procédé selon la revendication 7, dans lequel l'équipement agricole est équipé d'un dispositif de gestion d'outillage de tracteur (TIM) ou d'un dispositif compatible ISOBUS et dans lequel le réglage d'au moins l'une parmi : une vitesse de déplacement du véhicule de remorquage et une vitesse de rotation d'une prise de couple du véhicule de remorquage est réalisé de façon autonome en réponse à une instruction envoyée à partir de l'outillage pouvant être remorqué vers le véhicule de remorquage.

9. Procédé selon la revendication 1, dans lequel le plancher (46) à proximité du rotor (28) peut être déplacé par rapport à un axe de rotation du rotor (28).

10. Procédé selon la revendication 9, dans lequel le premier capteur (62) est un capteur de déplacement qui mesure au moins l'un parmi : un déplacement linéaire du plancher (46) au cours du transfert et un déplacement angulaire du plancher (46) au cours du transfert.

11. Procédé selon la revendication 1, comprenant, en outre, la transmission du flux de matériau organique coupé et transféré par l'intermédiaire du mécanisme d'alimentation à une unité de traitement distante de l'équipement agricole.

12. Procédé selon la revendication 11, comprenant, en outre, la fourniture, par l'unité de traitement, d'une carte de rendement sur la base du flux du matériau organique coupé et transféré par l'intermédiaire du mécanisme d'alimentation.

13. Dispositif de contrôle d'un flux d'une récolte, le dispositif comprenant :
une presse à balle agricole (10) comprenant une partie de collecte de culture (20) et une partie de formation de balle (22), la partie de collecte de culture (20) comportant au moins un rotor (28) et un plancher (46) à proximité du rotor (28) et étant configurée de manière à collecter un matériau organique coupé à partir d'un champ et à transférer le matériau organique coupé en aval vers la partie de formation de balle (22), et la partie de formation de balle (22) étant configurée de manière à recevoir le matériau organique coupé et transféré par la partie de collecte de culture (20) et à former une balle avec le matériau organique coupé ;
un dispositif de détection de flux de matériau comprenant :
un premier capteur (62) couplé de manière opérationnelle au plancher (46) et configuré de manière à mesurer des données d'effort proportionnelles à un effort exercé sur le plancher (46) par le matériau organique coupé transféré par la partie de collecte de culture (20) ; et
un second capteur (66) couplé de manière opérationnelle au rotor (28) et configuré de manière à mesurer des données de vitesse proportionnelles à une vitesse de rotation du rotor (28) lorsque le matériau organique coupé est transféré par la partie de collecte de culture (20) ; et
une unité de traitement configurée de manière à corréler les données d'effort et les données de vitesse avec un flux du matériau organique coupé transféré par l'intermédiaire de la partie de collecte de culture (20).

14. Dispositif selon la revendication 13, comprenant, en outre, un véhicule de remorquage configuré de manière à tracter la presse à balle agricole, dans lequel l'unité de traitement est, en outre, configurée de manière à fournir en temps réel le flux du matériau organique coupé et transféré par l'intermédiaire de la partie de collecte de culture (20) au véhicule de remorquage.

15. Dispositif selon la revendication 14, dans lequel l'unité de traitement est, en outre, configurée de manière à ajuster un paramètre opérationnel du véhicule de remorquage en réponse aux données d'effort et aux données de vitesse.

16. Dispositif selon la revendication 15, dans lequel le réglage d'un paramètre opérationnel du véhicule de remorquage comprend le réglage d'au moins l'une parmi : une vitesse de déplacement du véhicule de remorquage et une vitesse de rotation d'une prise de couple du véhicule de remorquage.

17. Dispositif selon la revendication 16, dans lequel la presse à balle agricole (10) et le véhicule de remorquage sont équipés d'un dispositif de gestion d'outillage de tracteur (TIM) ou d'un dispositif compatible ISOBUS et dans lequel le réglage d'au moins l'une parmi : une vitesse de déplacement du véhicule de remorquage et une vitesse de rotation d'une prise de couple du véhicule de remorquage est réalisé de façon autonome en réponse à une instruction envoyée à partir de la presse à balle agricole (10) vers le véhicule de remorquage.

18. Dispositif selon la revendication 13, dans lequel le plancher (46) à proximité du rotor (28) peut être déplacé par rapport à un axe de rotation du rotor (28).

19. Dispositif selon la revendication 18, dans lequel le premier capteur (62) est un capteur de déplacement qui mesure au moins l'un d'un déplacement linéaire du plancher (46), et d'un déplacement angulaire du plancher (46).
